# EUROPEAN PATENT APPLICATION

(11) **EP 4 851 444 A1**
(43) Date of publication of application: **09.12.2026**
(21) Application number: 26183389.1
(22) Date of filing: 05.06.2026
(51) Int. Cl.: F02C 7/25

(54) **AIRCRAFT ENGINE FLUID SYSTEM WITH SHUT-OFF VALVE**

(30) Priority: 05.06.2025 US 202519229409
(71) Applicant: Pratt & Whitney Canada Corp., Longueuil, Québec J4G 1A1 (CA)
(72) Inventor: MOHAMMED, Kashif, (01BE5) Longueuil, J4G 1A1 (CA)
(74) Representative: Dehns

(57) **Abstract**

An aircraft engine includes a fluid system with a fluid circuit fluidly connecting a plurality of components to a source of a fluid, the fluid being flammable. The fluid system further includes a component (41) of the plurality of components containing a volume of the fluid in an inner cavity (43) of the component (41) during normal operation of the aircraft engine. A valve (50) is disposed in the inner cavity (43) of the component (41) adjacent to an inlet (44) to the inner cavity (43). The valve (50) has an open configuration fluidly connecting the source of the fluid to the inner cavity (43) through the inlet (44) and a closed configuration in which the valve (50) blocks the inlet (44) to disconnect the source of the fluid from the inner cavity (43). The valve (50) is movable from the open configuration to the closed configuration upon being exposed to a predetermined temperature threshold corresponding to a fire hazard.

## Description

### TECHNICAL FIELD

The invention relates generally to aircraft engines and, more particularly, to emergency shutdown procedures for aircraft engines.

### BACKGROUND

Aircraft components may be certified as fire resistant or fireproof. According to airworthiness regulations, fire resistance requires the component to operate in a fire condition for five minutes while fireproof requires the component to comply with the fire resistance requirement and then to not leak a hazardous amount of a flammable fluid for an additional ten minutes. Making a component fireproof as opposed to fire resistant leads to increased cost, size, weight, and complexity. It may therefore be desirable to find ways to allow the use of a fire resistant component as opposed to a fireproof version of this same component.

### SUMMARY

According to one aspect of the present invention, there is provided an aircraft engine, comprising: a fluid system including a fluid circuit fluidly connecting a plurality of components to a source of a fluid, the fluid being flammable, a component of the plurality of components containing a volume of the fluid in an inner cavity of the component during normal operation of the aircraft engine; and a valve disposed in the inner cavity of the component adjacent to an inlet to the inner cavity, the valve having an open configuration fluidly connecting the source of the fluid to the inner cavity through the inlet and a closed configuration in which the valve blocks the inlet to disconnect the source of the fluid from the inner cavity, the valve movable from the open configuration to the closed configuration upon being exposed to a predetermined temperature threshold corresponding to a fire hazard.

In certain embodiments, the aircraft engine as defined above includes one or more of the following features, in whole or in part, and in any combination.

Optionally, and in accordance with the above, the valve includes a valve member biased by a biasing force of a biasing member towards the inlet and a retaining member restraining the valve member in the open configuration against the biasing force, the retaining member configured to release the valve member when the valve is exposed to the predetermined temperature threshold.

Optionally, and in accordance with any of the above, the biasing member is a spring member, the spring member being compressed in the open configuration and extended in the open configuration.

Optionally, and in accordance with any of the above, the valve member is a stopper having a chamfered edge, the chamfered edge engaging a perimeter of the inlet in the closed configuration to block the inlet.

Optionally, and in accordance with any of the above, the retaining member is coupled to a wall of the inner cavity by way of a connecting member adapted to transfer heat from the wall of the inner cavity to the retaining member.

Optionally, and in accordance with any of the above, the retaining member includes a housing defining a cavity surrounding the valve member, the housing having a coefficient of thermal expansion greater than a coefficient of thermal expansion of the valve member.

Optionally, and in accordance with any of the above, the valve member is engaged with an inner wall of the cavity of the housing such that the valve member is frictionally retained in the cavity in the open configuration, the housing configured to thermally expand at the predetermined temperature threshold such that the valve member is released from the cavity and biased, by the biasing member, towards the inlet.

Optionally, and in accordance with any of the above, the retaining member includes a housing defining a cavity surrounding the valve member and a bimetallic plate retaining the valve member in place in the open configuration, the bimetallic plate configured to displace at the predetermined temperature threshold such that the valve member is released by the bimetallic plate and biased, by the biasing member, towards the inlet.

Optionally, and in accordance with any of the above, in the open configuration, a distal end of the bimetallic plate engages a groove in the valve member through a hole in the housing.

According to another aspect of the present invention, there is provided a fluid system for an aircraft engine, comprising: a fluid circuit fluidly connecting a plurality of components to a source of a fluid, the fluid being flammable, a component of the plurality of components containing a volume of the fluid in an inner cavity of the component during normal operation of the aircraft engine; and a valve disposed in the inner cavity of the component adjacent an inlet to the inner cavity, the valve having an open configuration fluidly connecting the source of the fluid to the inner cavity through the inlet and a closed configuration in which the valve blocks the inlet to disconnect the source of the fluid from the inner cavity, the valve movable from the open configuration to the closed configuration upon being exposed to a predetermined temperature threshold corresponding to a fire hazard.

In certain embodiments, the fluid system as defined above includes one or more of the following features, in whole or in part, and in any combination.

Optionally, and in accordance with the above, the valve includes a valve member biased by a biasing force of a biasing member towards the inlet and a retaining member restraining the valve member in the open configuration against the biasing force, the retaining member configured to release the valve member when the valve is exposed to the predetermined temperature threshold.

Optionally, and in accordance with any of the above, the biasing member is a spring member, the spring member being compressed in the open configuration and extended in the open configuration.

Optionally, and in accordance with any of the above, the valve member is a stopper having a chamfered edge, the chamfered edge engaging a perimeter of the inlet in the closed configuration to block the inlet.

Optionally, and in accordance with any of the above, the retaining member is coupled to a wall of the inner cavity by way of a connecting member adapted to transfer heat from the wall of the inner cavity to the retaining member.

Optionally, and in accordance with any of the above, the retaining member includes a housing defining a cavity surrounding the valve member, the housing having a coefficient of thermal expansion greater than a coefficient of thermal expansion of the valve member.

Optionally, and in accordance with any of the above, the valve member is engaged with an inner wall of the cavity of the housing such that the valve member is frictionally retained in the cavity in the open configuration, the housing configured to thermally expand at the predetermined temperature threshold such that valve member is released from the cavity and biased, by the biasing member, towards the inlet.

Optionally, and in accordance with any of the above, the retaining member includes a housing defining a cavity surrounding the valve member and a bimetallic plate retaining the valve member in place in the open configuration, the bimetallic plate configured to displace at the predetermined temperature threshold such that the valve member is released by the bimetallic plate and biased, by the biasing member, towards the inlet.

Optionally, and in accordance with any of the above, in the open configuration, a distal end of the bimetallic plate engages a groove in the valve member through a hole in the housing.

According to a further aspect of the present invention, there is provided a method of stopping a flow of a fluid to a component of a fluid system of an aircraft engine, the fluid being flammable, the method comprising: permitting fluid communication from a source of the fluid to the component through an inlet to the component, the component containing a volume of the fluid during normal engine operation; and upon the component being exposed to a fire event, blocking fluid communication from the source of the fluid to the component by activating a valve adjacent to the inlet to seal the inlet, the valve activated upon exposure to a predetermined temperature threshold corresponding to the fire event.

Optionally, and in accordance with the above, activating the valve adjacent to the inlet includes biasing, via a biasing member exerting a biasing force, a valve member of the valve towards the inlet from a retaining member, the biasing force exceeding a retaining force of the retaining member when the valve is exposed to the predetermined temperatures threshold.

### DESCRIPTION OF THE DRAWINGS

Reference is now made to the accompanying figures in which:
FIG. 1 is a schematic cross sectional view of a gas turbine engine;
FIG. 2 is a schematic view of a fluid system, depicted as an oil system, for the aircraft engine of FIG. 1;
FIG. 3A is a schematic cross sectional view of a component of the fluid system of FIG. 2;
FIG. 3B is a schematic cross sectional view of the inlet to the component of FIG. 3A with a closure in an open configuration;
FIG. 3C is a front view of the closure of FIG. 3B in the open configuration;
FIG. 3D is a schematic cross sectional view of the inlet to the component of FIG. 3A with the closure in a closed configuration;
FIG. 3E is a front view of the closure of FIG. 3D in the closed configuration;
FIG. 4 is a schematic cross sectional view of a component of the fluid system of FIG. 2, according to another embodiment;
FIG. 5 is a schematic cross sectional view of a component of the fluid system of FIG. 2, according to another embodiment;
FIGS. 6A-6B are schematic cross sectional views of an inlet to a component of the fluid system of FIG. 2, with a closure in an open and a closed configuration, respectively, according to another embodiment;
FIGS. 7A-7B are schematic cross sectional views of an inlet to a component of the fluid system of FIG. 2, with a closure in an open and a closed configuration, respectively, according to another embodiment; and
FIGS. 8A-8B are schematic cross sectional views of an inlet to a component of the fluid system of FIG. 2, with a closure in an open and a closed configuration, respectively, according to another embodiment.

### DETAILED DESCRIPTION

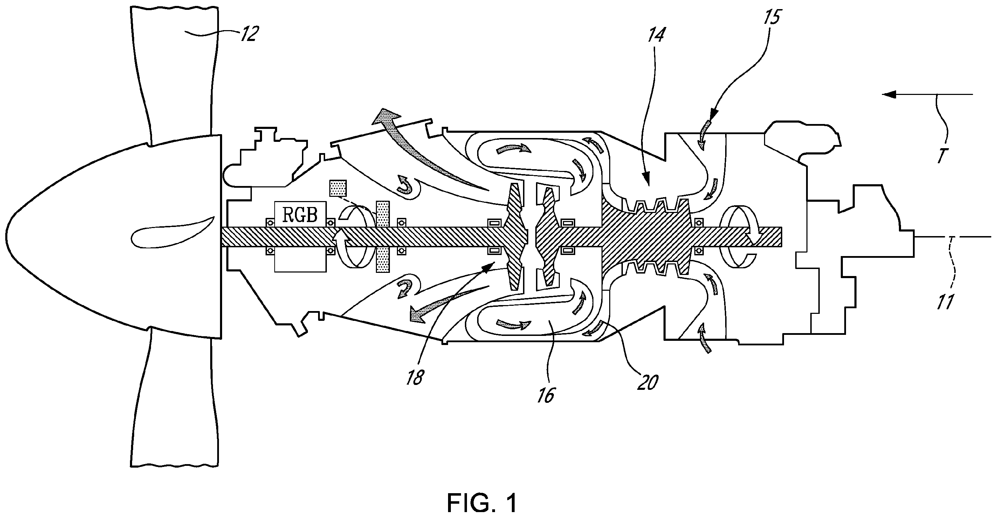

FIG. 1 illustrates an aircraft engine depicted as a gas turbine engine 10 (in this case, a turboprop) of a type preferably provided for use in subsonic flight, and in driving engagement with a rotatable load, which is depicted as a propeller 12. The gas turbine engine 10 has in serial flow communication a compressor section 14 for pressurizing the air drawn in through inlet 15, a combustor 16 in which the compressed air is mixed with fuel and ignited for generating an annular stream of hot combustion gases, and a turbine section 18 for extracting energy from the combustion gases. Engine 10 includes a casing through which a core gas path flows. While FIG. 1 depicts engine 10 as being a turboprop engine, other engine types are contemplated such as turboshaft engines. Engine 10 may also be a hybrid-electric engine or an auxiliary power unit.

It should be noted that the terms "upstream" and "downstream" used herein refer to the direction of an air/gas flow passing through an annular gaspath 20 of the gas turbine engine 10. It should also be noted that the term "axial", "radial", "angular" and "circumferential" are used with respect to a central axis 11 of the annular gaspath 20, which may also be a central axis of gas turbine engine 10. The gas turbine engine 10 is depicted as a reverse-flow engine in which the air flows in the annular gaspath 20 from a rear of the gas turbine engine 10 to a front of the gas turbine engine 10, relative to a direction of travel T of the gas turbine engine 10. This is opposite than a through-flow engine in which the air flows within the gaspath in a direction opposite the direction of travel T, from the front of the engine towards the rear of the gas turbine engine 10. The principles of the present disclosure can be applied to both reverse-flow and through-flow engines and to any other gas turbine engines, such as a turbofan engine and a turboprop engine.

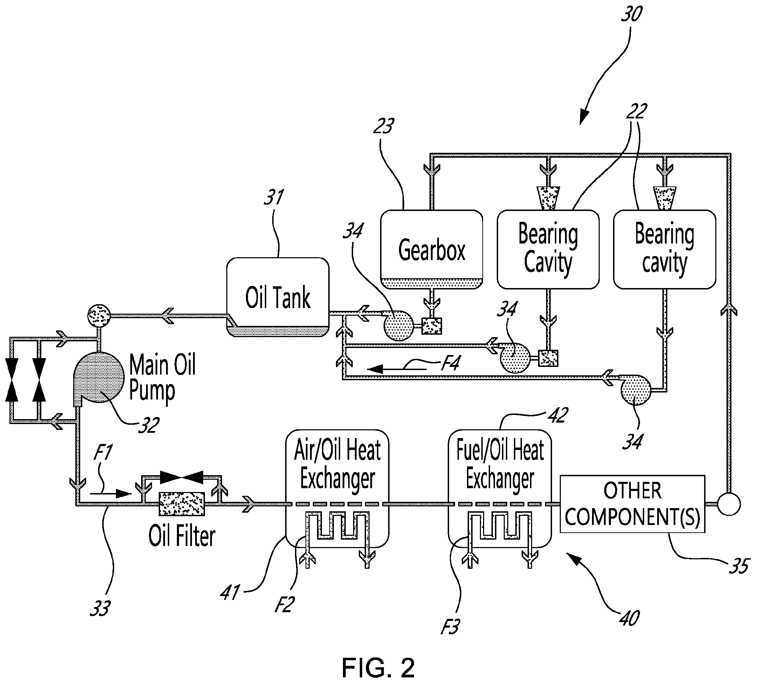

Referring additionally to FIG. 2, an oil system 30 is provided for circulating oil to various components of the engine 10 back to an oil source 31 (e.g., oil tank). The oil flowing through the oil system 30 is expected to see its temperature increase during use. It may therefore be required to cool down the oil. This may be done in many ways, for example, by transferring heat to ambient air of an environment outside the engine 10 and/or to another fluid, such as the fuel.

In the embodiment shown, the gas turbine engine 10 has a heat exchange system 40 that is used to exchange heat between different fluids for proper operation of the gas turbine engine 10. In the present case, the heat exchange system 40 includes a first heat exchanger 41, which may be referred to as an air-cooled oil cooler (ACOC) used to transfer heat from the oil to the environment outside the gas turbine engine 10. The heat exchange system 40 further includes a second heat exchanger 42, which may be referred to as a fuel-oil heat exchanger (FOHE), used for transferring heat from the oil of the oil system 30 to fuel flowing from a fuel reservoir R, or any other fuel source, to the combustor 16 of the gas turbine engine 10 for combustion. Pre-heating the fuel as such may increase the efficiency of the combustion of the fuel and may cool down the oil that heats up while lubricating the bearings 21. In some cases, the first heat exchanger 41 may be used to transfer or extract heat to/from an aircraft system in need.

The depicted oil system 30 includes an oil circuit 33, which typically includes one or more lines to flow the oil and an oil pump 32 that drives an oil flow F1 within an oil conduit of the oil circuit 33 from the oil source 31. In embodiments, the oil system 30 is a pressure regulated system in which a pressure regulating valve may be connected in parallel to the oil pump 32. The oil flow F1 exchanges heat with an airflow F2 from the environment through the first heat exchanger 41 and exchanges heat with a fuel flow F3 through the second heat exchanger 42. The oil flow F1 is then distributed between different components in need of oil. These components may include, for instance, one or more bearing cavity(ies) 22, a generator, an actuator, and/or a gearbox 23, for instance a reduction gearbox. Used oil is then scavenged and scavenge pumps 34 drive a scavenge oil flow F4 from scavenge outlets of the bearing cavities 22 and the gearbox 23 back to the oil source 31 where the oil may be flown back to the oil pump 32. Typically, the oil tank 31 has a volume devoid of oil (e.g., empty space containing air). During lubrication, the oil is expected to be mixed with air. Thus, the scavenge oil flow F4 is a multi-phase fluid containing oil and air. The oil may rest some time in the oil tank before being drawn by the pump 32. During this time, the air contained in the oil may naturally separate. A de-oiler and/or de-aerator may be used to accelerate the removal of air from the scavenge oil flow F4. It will be appreciated that many other configurations of the oil system 30 are contemplated. For instance, a different number of scavenge pumps may be used, some components may be omitted, and so on. An actuator may be fluidly connected to the oil conduit and may rely on oil pressure for its operation. It will also be appreciated that the present disclosure is applicable to other fluid systems and fluid circuits within the engine 10.

Aircraft engine components, such as the first heat exchanger 41 (i.e., ACOC), the second heat exchanger 42 (i.e., FOHE), other component(s) 35, the oil pump 32, the scavenge pump 34, the gearbox 23, and so on, may be required to be certified as either fire resistant or fireproof. The other component(s) 35 may include, for instance, a generator, a gearbox, an actuator, and so on. To be certified as fire resistant, the component needs to operate in a fire condition for five minutes. To be certified as fireproof, the component needs to meet fire resistant requirements and, in addition, not leak a hazardous amount of flammable fluid (e.g., oil, fuel) for an additional 10 minutes. Typically, an amount of flammable fluid is considered hazardous if it exceeds 250 millilitres. This volume may however change depending on the regulatory body.

In the context of the present disclosure, the fire proof and fire resistance requirements are in reference to Federal Aviation Administration (FAA) regulations. These requirements may vary depending on the regulations of the countries in which the aircraft engine will be operated. In some cases, the fire proof and fire resistant regulations are defined by Article 533.17 of the Airworthiness Manual Chapter 533 of the Canadian Aviation Regulations (CARs). The "fireproof" and "fire resistant" definitions are in conformance with the requirements set by a national or international regulatory body, for example, the Federal Aviation Administration, the European Aviation Safety Agency, the Civil Aviation Administration of China, the Japan Civil Aviation Bureau, or the Russian Federal Agency for Air Transport to name a few.

In the case of an emergency shutdown due to a fire within the engine 10, the engine 10 is provided with procedures to improve the survivability of its hardware. Indeed, during a fire scenario, components such as oil tubes and fittings are exposed to an engulfing flame and are thus susceptible to damage, for instance leakage.

If a fire event is detected, the gas turbine engine 10 may be shut down. However, for some applications such as for a turboprop, it may not be possible to disengage the load 12, which may correspond to a propeller. Thus, even if the gas turbine engine 10 is shut down after a fire event, the load 17 may continue to drive some engine components such as the pump 32. **In** other words, in some applications, a drive path from the propeller to the pump 32 may be devoid of a clutch. Consequently, even after shutdown of the gas turbine engine 10, an oil flow may continue to be supplied to components of the oil system 30. One or more of these other components may be exposed to a fire and may be required to comply only with fire resistance requirements since they contain a baseline volume of oil that is less than a maximum volume of oil per resistance requirements. However, this or these components may be required to be fire proof because of the oil that is continuously supplied to them via the pump 32 driven by wind milling of the propeller even after shutdown of the gas turbine engine 10.

The present disclosure therefore describes systems and methods for stopping a flow of oil or other fluid (e.g., fuel) to a component even if an oil flow (or fuel flow) is still generated, for instance because of the wind milling of the propeller. As such, the component may only be required to satisfy fire resistance requirements rather than fire proof requirements.

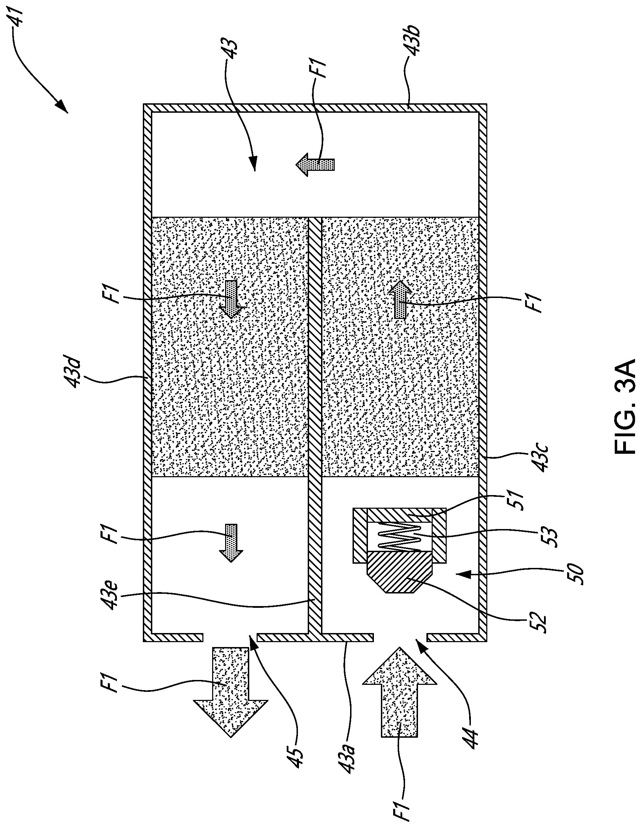

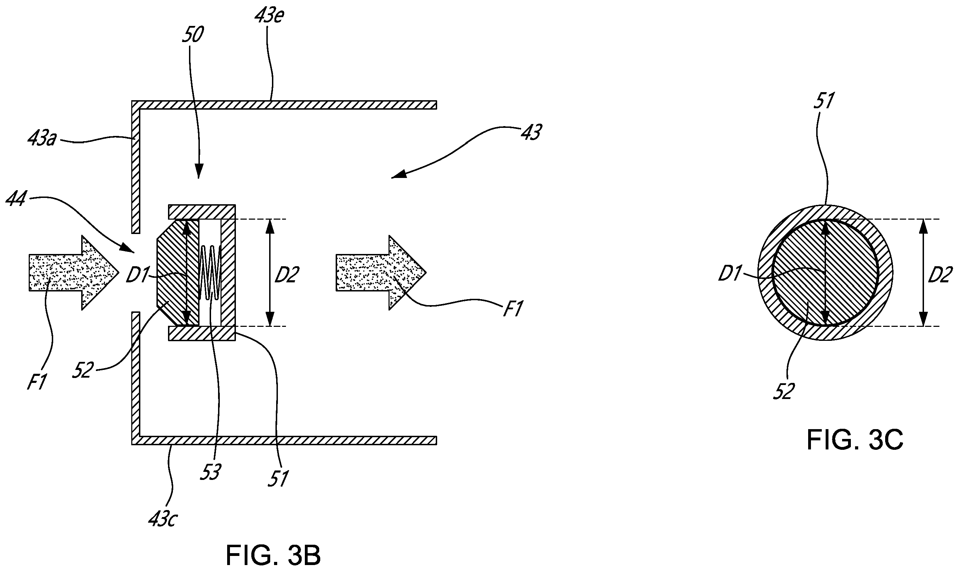

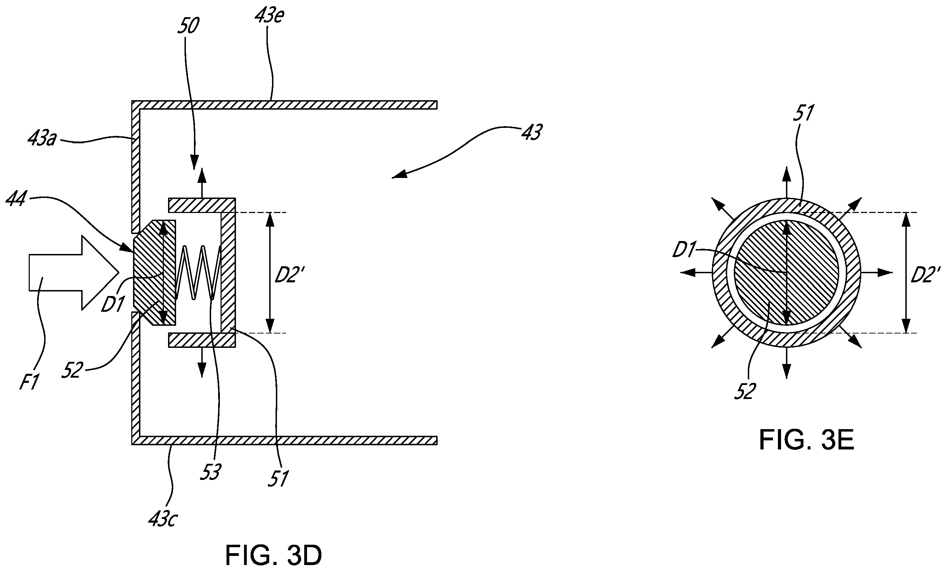

Referring now to FIG. 3A, a fluid carrying component in the oil system 30 is shown. FIG. 3A depicts this component as the heat exchanger 41. It is understood, however, that this component can instead be the heat exchanger 42 or another fluid carrying component of the oil system 30. It is further understood that aspects of the present disclosure described below are simultaneously implementable in more than one fluid carrying component of the oil system 30. Fluid carrying components such as the heat exchanger 41 are susceptible to breach (causing a leakage of oil which can fuel the fire) when they reach a temperature at which their materials will melt, for instance, at 1000 degrees Fahrenheit (538 Celsius). The present disclosure therefore provides for systems and method for stopping the flow of oil (or other fluid) at a temperature below the temperature at which the component is likely to breach. Such temperature is referred to as a predetermined temperature threshold.

Still referring to FIG. 3A, the heat exchanger 41 includes an inner cavity 43 with an inlet 44 and an outlet 45. The inlet 44 and outlet 45 are each in fluid communication with the oil circuit 33 so that the oil flow F1 flows into the inner cavity 43 through the inlet 44 and out of the inner cavity 43 through the outlet 45. The inner cavity 43 includes outer walls, illustratively front wall 43a, rear wall 43b, first side wall 43c and second side wall 43d. It is understood that other outer walls, while not shown, are provided for the inner cavity 43 to seal the inner cavity 43. The inner cavity further includes one or more inner walls 43e defining a heat exchange matrix.

Still referring to FIG. 3A, a valve 50 is provided inside the inner cavity 43 and adapted for selectively blocking and unblocking the inlet 44 so as to allow or prevent the oil flow F1 from flowing through the inner cavity 43. The valve 50 is adapted to move between a normally open configuration (shown in FIGS. 3A-3C) in which the inlet 44 is unblocked and the inner cavity 43 is in fluid communication with the oil circuit 33 upstream of the heat exchanger 41, and a closed configuration (shown in FIGS. 3D-3E) in which the inlet 44 is blocked and the inner cavity 43 is fluidly disconnected from the oil circuit 33 upstream of the heat exchanger. As will be discussed in further detail, the movement of the valve 50 from the open configuration to the closed configuration is initiated based on a temperature of the oil surrounding the valve 50 and/or a temperature of one of the outer walls 43a-43d, such temperatures indicative of the presence or absence of a fire in the engine 10. Valve 50 is thus referred to as a heat-triggered valve, as it is activated when exposed to the predetermined temperature threshold corresponding to the fire hazard.

Referring additionally to FIGS. 3B-3C, the valve 50 is shown in the open configuration. In the shown embodiment, the valve 50 includes a housing 51 (also referred to as a retaining member) that receives and selectively retains a valve member 52, with a biasing or deformable member 53 (illustratively a spring) extending between the valve member 52 and an end wall of the housing 51 for urging (e.g., spring-loading) the valve member 52 towards its closed configuration. In the shown case, the valve member 52 has chamfered edges. Other configurations for the valve member 52 are contemplated. In the normally open configuration of the valve 50, the valve member 52 is secured, retained or snugly received within the housing 51 such that the inlet 44 remains unblocked, thereby allowing the oil flow F1 to flow inside the inner cavity 43. Illustratively, at normal operating temperatures, the valve member 52 includes a circular maximum outer diameter D1 and the housing has an annular cross-sectional shape with inner diameter D2. In the shown embodiment, the housing 51 is formed of a material having a higher factor of thermal expansion than the valve member 52. Under normal operating conditions (i.e., normal operation) of the engine, the oil flow F1 operates at or below a maximum temperature, for instance 300 degrees Fahrenheit (149 Celsius). The housing 51 and valve member 52 are thus made of materials such that the valve member 52 is frictionally retained within the housing 51 (i.e., D1 is approximately equal to D2) up to this maximum temperature of the oil flow F1. That is the friction forces at the interface between the outer diameter surface D1 of the valve member 52 and the inner diameter surface of the housing 51 are greater than the biasing force of the deformable member 53 (e.g. the spring). As such, under such normal operating conditions, the valve 50 will remain in the open configuration and the inlet 44 will remain unblocked. Again, it is understood that, in this position, the retention force of the housing 51 acting against the valve member 52 (i.e., the frictional force) exceeds the force (e.g., spring force) exerted by the deformable member 53 against the valve member 52, thereby allowing the valve 50 to remain in the open configuration.

Referring now to FIGS. 3D-3E, the valve 50 is shown in the closed configuration. When a fire is present in the engine 10, the temperature of the various components increases, and thus the temperature of the fluids contained within these components increases. As such, in the case of a fire, the temperature of the walls 43a-43d of the inner cavity 43 will increase, causing the temperature of the oil flow F1 within the inner cavity 43 to increase as well. The housing 51 is thus adapted to expand under increased temperature such that, when the oil flow F1 reaches a predetermined temperature (e.g., 350 degrees Fahrenheit (177 Celsius)), the housing 51 will expand sufficiently relative to valve member 52 such that the valve member 52 is no longer retained therewithin (i.e., diameter D2' is greater than diameter D1). The valve member 52 is then biased by the deformable member 53 towards the inlet 44 to block the inlet 44, thereby ceasing the flow of oil flow F1 into the inner cavity 43. Other temperatures of the oil flow F1 at which the housing 51 expands are contemplated, for instance based on the temperature at which the heat exchanger 41 is likely to breach. Illustratively, the chamfered edge of the valve member 52 engage the perimeter of the inlet 44 to fully block the inlet 44, with the chamfered shape of the edge aiding alignment of the valve member 52 with the inlet 44. Illustratively, the inlet 44 is aligned with the valve 50 so that the valve member 52, once released from the housing 51, is biased by the deformable member 53 in a direction towards the inlet 44.

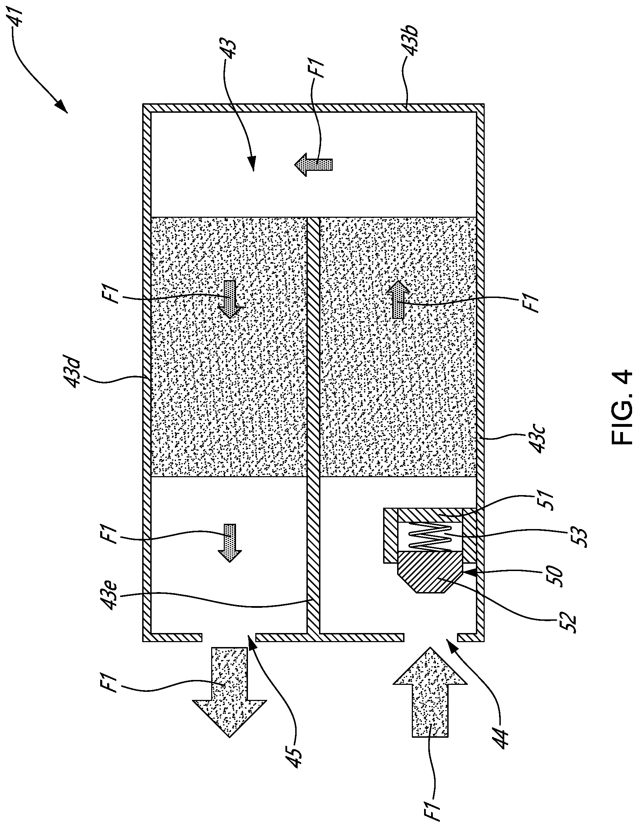

Referring now to FIG. 4, another embodiment of a valve 50 in a fluid carrying component in the oil system 30, illustratively heat exchanger 41, is shown. FIG. 4 shows the valve 50 in the open configuration, as the oil flow F1 is permitted to flow through the inner cavity 43 via the inlet 44. As was the case with the embodiment of FIGS. 3A-3E, the valve 50 of FIG. 4 includes a housing 51, valve member 52 and deformable member 53, with the housing 51 having a higher rate of thermal expansion than the valve member 52. In this embodiment, the housing 51 is directly mounted to a wall of the inner cavity 43, illustratively side wall 43c. Stated differently, at least one side of the housing 51 directly engages or abuts the side wall 43c (or other wall of the inner cavity 43). As such, as the temperature surrounding the heat exchanger 41 increases due to a fire, the temperature of the housing 51 will increase as well due to heat conduction through the side wall 43c. The material of the housing 51 is thus selected to have a rate of thermal expansion so that valve member 52 is released to block the inlet 44 (i.e., transitioning to the closed configuration) when the temperature outside the heat exchanger 41 reaches a predetermined temperature indicative of a fire (e.g., 700 degrees Fahrenheit (371 Celsius)).

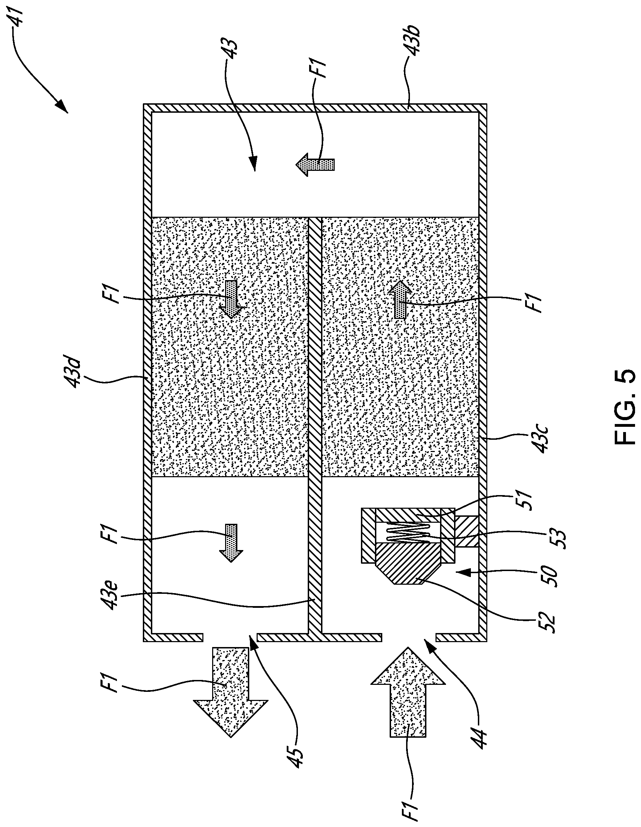

Referring now to FIG. 5, another embodiment of a valve 50 in a fluid carrying component in the oil system 30, illustratively heat exchanger 41, is shown. FIG. 5 shows the valve 50 in the open configuration, as the oil flow F1 is permitted to flow through the inner cavity 43 via the inlet 44. As was the case with the embodiments of FIGS. 3A-3E and 4, the valve 50 of FIG. 5 includes a housing 51, valve member 52 and deformable member 53, with the housing 51 having a higher rate of thermal expansion than the valve member 52. In this embodiment, the housing 51 is indirectly mounted to a wall of the inner cavity 43, illustratively to side wall 43c, via connecting member 54. Stated differently, at least one side of the housing 51 is coupled to the side wall 43c (or other wall of the inner cavity 43) via connecting member 54. The connecting member 54 is made of a material with high conductivity so as to transfer heat from outside the heat exchanger 41 (via the side wall 43c) to the housing 51. As such, as the temperature surrounding the heat exchanger 41 increases due to a fire, the temperature of the housing 51 will increase as well due to heat conduction through the side wall 43c and connecting member 54. The material of the housing 51 is thus selected to have a rate of thermal expansion so that valve member 52 is released to block the inlet 44 (i.e., transitioning to the closed configuration) when the temperature outside the heat exchanger 41 reaches a predetermined temperature indicative of a fire (e.g., 700 degrees Fahrenheit (371 Celsius)).

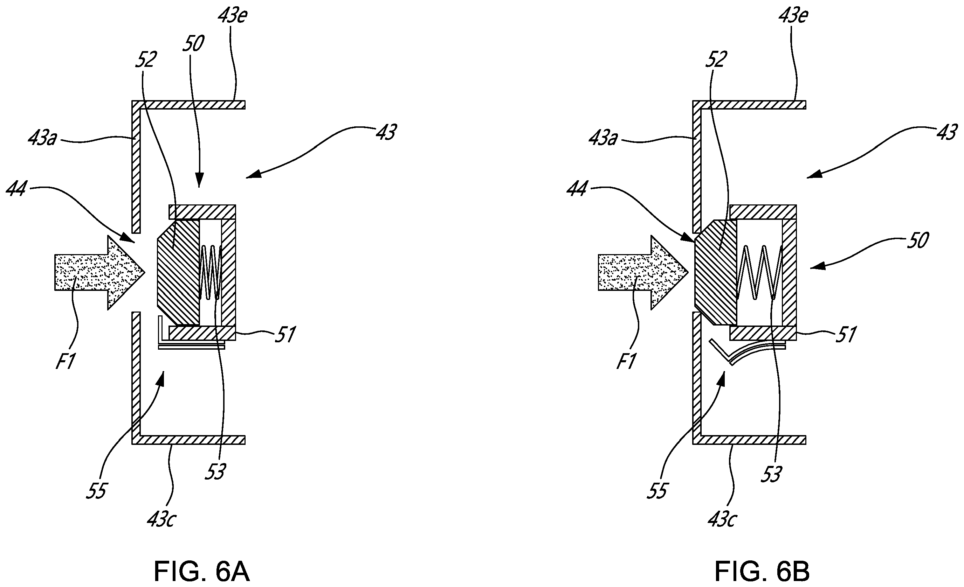

Referring now to FIGS. 6A-6B, another embodiment of a valve 50 in a fluid carrying component in the oil system 30, illustratively heat exchanger 41, is shown. FIG. 6A shows the valve 50 in the open configuration, as the oil flow F1 is permitted to flow into the inner cavity 43 via the inlet 44. FIG. 6B shows the valve 50 in the closed configuration, as the inlet 44 is blocked and oil flow F1 is not permitted to flow into the inner cavity 43. As was the case with the embodiments of FIGS. 3A-5, the valve 50 of FIGS. 6A-6B includes a housing 51, valve member 52 and deformable member 53 adapted to bias the valve member 52 towards the inlet 44, with the valve 50 being passively controlled as a function of the temperature of the oil flow F1 within the inner cavity 43, as was the case in the embodiment of FIGS. 3A-3E.

In the embodiment shown in FIGS. 6A-6B, another form of temperature triggered retainer is used to retain the valve member 52 in its open configuration when operated under a predetermined temperature threshold. Indeed, according to this embodiment, rather than the housing 51 deforming based on the surrounding temperature, a bimetallic plate 55 is provided for controlling the position of the valve 50. The bimetallic plate 55 thus cooperates with the housing 51 to act as the retaining member. In particular, the bimetallic plate 55 is positioned adjacent to the valve 50 and displaceable, based on the temperature of the oil flow F1 within the inner cavity 43, between a first position in which the bimetallic plate 55 blocks or impedes motion of the valve member 52 (see FIG. 6A), and a second position in which the bimetallic plate 55 does not impede motion of the valve member 52 (see FIG. 6B). Illustratively, the bimetallic plate 55 is formed of two coupled plates, one having a higher rate of thermal expansion than the other, disposed against the housing 51. In the first position (shown in FIG. 6A), an end portion of the bimetallic plate 55 extends towards the valve member 52, illustratively abutting one of the chamfered edge of the valve member 52, to retain the valve member 52 in place. It is understood that, in this position, the retention force of the bimetallic plate 55 abutting the valve member 52 exceeds the force (e.g., spring force) exerted by the deformable member 53 against the valve member 52, thereby allowing the valve 50 to remain in the open configuration. As the temperature of the oil flow F1 in the inner cavity 43 increases, the bimetallic plate 55 deforms due to the difference in the rate of thermal expansions between the two coupled plates, with the end portion of the bimetallic plate 55 displacing away from the valve member 52 (see FIG. 6B). As such, the force of the deformable member 53 acting against valve member 52 biases the valve member 52 towards the inlet 44, thereby moving the valve into the closed configuration and blocking the flow of the oil flow F1 into the inner cavity 43. The bimetallic plate 55 is thus made of materials such that it will deform under increased temperature such that, when the oil flow F1 reaches a predetermined temperature threshold (e.g., 350 degrees Fahrenheit (177 Celsius)), the bimetallic plate 55 will displace sufficiently to release the valve member 52 from its retention. Various sizes and shapes of the bimetallic plate 55 are contemplated.

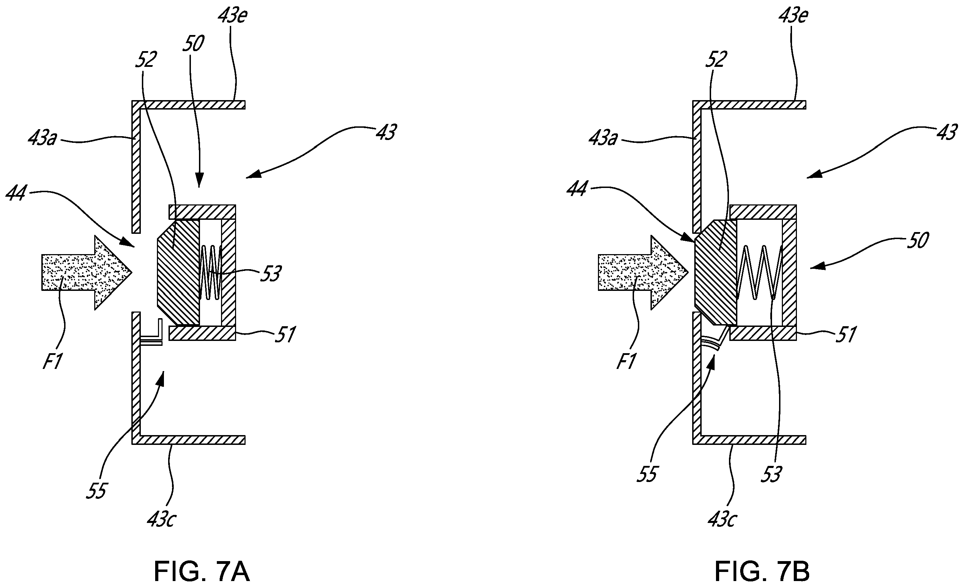

Referring now to FIGS. 7A-7B, another embodiment of a valve 50 in a fluid carrying component in the oil system 30, illustratively heat exchanger 41, is shown. FIG. 7A shows the valve 50 in the open configuration, as the oil flow F1 is permitted to flow into the inner cavity 43 via the inlet 44. FIG. 7B shows the valve 50 in the closed configuration, as the inlet 44 is blocked and oil flow F1 is not permitted to flow into the inner cavity 43. As was the case with the embodiment of FIGS. 6A-6B, the valve 50 of FIGS. 6A-6B includes a housing 51, valve member 52 and deformable member 53 adapted to bias the valve member 52 towards the inlet 44, with the valve 50 being passively controlled as a function of the temperature of the oil flow F1 within the inner cavity 43. In addition, as was the case with the embodiment of FIGS. 6A-6B, a bimetallic plate 55 is provided for controlling the position of the valve 50, the bimetallic plate 55 cooperating with the housing 51 to act as the retaining member. The metallic plate 55 acts as a thermally triggered retainer for releasing the valve member 52 upon the temperature inside the inner cavity 43 reaching a predetermined temperature threshold corresponding to a potential fire hazard. While the bimetallic plate 55 shown in FIGS. 6A-6B is coupled to the housing 51 of the valve, the bimetallic plate 55 is coupled to a wall of the inner cavity 43, illustratively the front wall 43a.

Still referring to FIGS. 7A-7B, the bimetallic plate 55 is displaceable, based on the temperature of the oil flow F1 within the inner cavity 43, between a first position in which the bimetallic plate 55 blocks or impedes motion of the valve member 52 (see FIG. 7A), and a second position in which the bimetallic plate 55 does not impede motion of the valve member 52 (see FIG. 7B). In addition, as the bimetallic plate 55 is mounted to the front wall 43a, it is more susceptible to react based on the temperature outside the heat exchanger 41 due to the conductive heat transferred through the front wall 43a. Illustratively, the bimetallic plate 55 is formed of two coupled plates, one having a higher rate of thermal expansion than the other, disposed against the front wall 43a. In the first position (shown in FIG. 7A), an end portion of the bimetallic plate 55 extends towards the valve member 52, illustratively abutting one of the chamfered edge of the valve member 52, to retain the valve member 52 in place. It is understood that, in this position, the retention force of the bimetallic plate 55 abutting the valve member 52 exceeds the force (e.g., spring force) exerted by the deformable member 53 against the valve member 52, thereby allowing the valve 50 to remain in the open configuration. As the temperatures of the oil flow F1 in the inner cavity 43 and of the front wall 43a increase, the bimetallic plate 55 deforms due to the difference in the rate of thermal expansions between the two coupled plates, with the end portion of the bimetallic plate 55 displacing away from the valve member 52 (see FIG. 7B). As such, the force of the deformable member 53 acting against valve member 52 biases the valve member 52 towards the inlet 44, thereby moving the valve into the closed configuration and blocking flow of the oil flow F1 into the inner cavity 43. The bimetallic plate 55 is thus made of materials such that it will deform under increased temperature such that, when the oil flow F1 reaches a predetermined temperature (e.g., 350 degrees Fahrenheit (177 Celsius)) and/or the temperature outside the heat exchanger 41 reaches a predetermined temperature (e.g., 700 degrees Fahrenheit (371 Celsius), the bimetallic plate 55 will displace sufficiently to release the valve member 52 from its retention. Various sizes and shapes of the bimetallic plate 55 are contemplated.

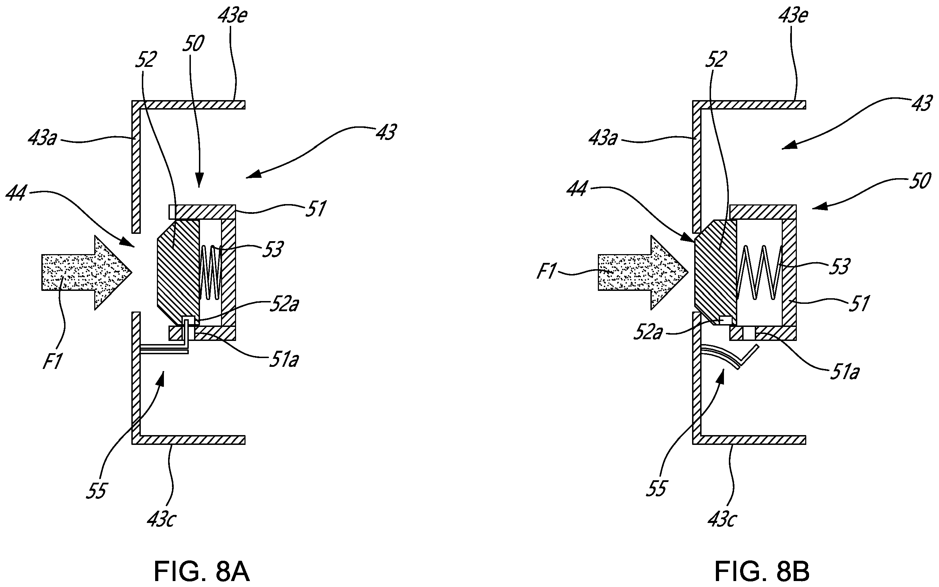

Referring now to FIGS. 8A-8B, another embodiment of a valve 50 in a fluid carrying component in the oil system 30, illustratively heat exchanger 41, is shown. FIG. 8A shows the valve 50 in the open configuration, as the oil flow F1 is permitted to flow into the inner cavity 43 via the inlet 44. FIG. 8B shows the valve 50 in the closed configuration, as the inlet 44 is blocked and oil flow F1 is not permitted to flow into the inner cavity 43. As was the case with the embodiment of FIGS. 7A-7B, the valve 50 of FIGS. 8A-8B includes a housing 51, valve member 52 and deformable member 53 adapted to bias the valve member 52 towards the inlet 44, with the valve 50 being passively controlled as a function of the temperature of the oil flow F1 within the inner cavity 43. In addition, as was the case with the embodiment of FIGS. 7A-7B, a bimetallic plate 55 is provided for controlling the position of the valve 50, the bimetallic plate 55 being coupled to a wall of the inner cavity 43, illustratively the front wall 43a, the bimetallic plate 55 cooperating with the housing 51 to act as the retaining member. In the embodiment of FIG. 8A-8B, the housing 51 includes a hole 51a extending therethrough, and the valve member 52 includes a groove 52a extending thereinto. In the open configuration of the valve 50, the hole 51a is aligned with the groove 52a, with a distal end of the bimetallic plate 55 extending through the hole 51a and seated within the groove, thereby retaining the valve member 52 in place.

Still referring to FIGS. 8A-8B, the bimetallic plate 55 is displaceable, based on the temperature of the oil flow F1 within the inner cavity 43, between a first position in which the distal end of the bimetallic plate 55 engages the hole 51a and groove 51b to block or impede motion of the valve member 52 (see FIG. 8A), and a second position in which the bimetallic plate 55 does not impede motion of the valve member 52 (see FIG. 8B). In addition, as the bimetallic plate 55 is mounted to the front wall 43a, it is more susceptible to react based on the temperature outside the heat exchanger 41 due to the conductive heat transferred through the front wall 43a. Illustratively, the bimetallic plate 55 is formed of two coupled plates, one having a higher rate of thermal expansion than the other, disposed against the front wall 43a. As the temperatures of the oil flow F1 in the inner cavity 43 and of the front wall 43a increase, the bimetallic plate 55 deforms due to the difference in the rate of thermal expansions between the two coupled plates, with the end portion of the bimetallic plate 55 displacing out of the groove 52a and hole 51a (see FIG. 8B). As such, the force of the deformable member 53 acting against valve member 52 biases the valve member 52 towards the inlet 44, thereby moving the valve into the closed configuration and blocking flow of the oil flow F1 into the inner cavity 43. The bimetallic plate 55 is thus made of materials such that it will deform under increased temperature such that, when the oil flow F1 reaches a predetermined temperature (e.g., 350 degrees Fahrenheit (177 Celsius)) and/or the temperature outside the heat exchanger 41 reaches a predetermined temperature (e.g., 700 degrees Fahrenheit (371 Celsius)), the bimetallic plate 55 will displace sufficiently to release the valve member 52 from its retention. Various sizes and shapes of the bimetallic plate 55 are contemplated.

According to the present disclosure, there is provided an exemplary method of stopping a flow of a fluid to a component, for instance heat exchanger 41, of a fluid system, for instance oil system 30, of an aircraft engine 10, the fluid being flammable, for instance oil. Fluid communication is permitted from a source 31 of the fluid to the component 41 through an inlet 44 to the component 41, the component 41 containing a volume of the fluid during normal engine operation. In response to the component 41 being exposed or subjected to a fire event, fluid communication from the source 31 of the fluid to the component 41 is blocked by activating a valve 50 adjacent to the inlet 44 to seal the inlet 44, the valve 50 activated upon exposure to a predetermined temperature threshold corresponding to the fire event. Various additions and modifications to the method described herein are contemplated.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A fluid system (30) for an aircraft engine (10), comprising:
a fluid circuit (33) fluidly connecting a plurality of components to a source (31) of a fluid, the fluid being flammable, a component (41) of the plurality of components containing a volume of the fluid in an inner cavity (43) of the component (41) during normal operation of the aircraft engine (10); and
a valve (50) disposed in the inner cavity (43) of the component (41) adjacent an inlet (44) to the inner cavity (43), the valve (50) having an open configuration fluidly connecting the source (31) of the fluid to the inner cavity (43) through the inlet (44) and a closed configuration in which the valve (50) blocks the inlet (44) to disconnect the source (31) of the fluid from the inner cavity (43), the valve (50) movable from the open configuration to the closed configuration upon being exposed to a predetermined temperature threshold corresponding to a fire hazard.

2. The fluid system (30) of claim 1, wherein the valve (50) includes a valve member (52) biased by a biasing force of a biasing member (53) towards the inlet (44) and a retaining member restraining the valve member (52) in the open configuration against the biasing force, the retaining member configured to release the valve member (52) when the valve (50) is exposed to the predetermined temperature threshold.

3. The fluid system (30) of claim 2, wherein the biasing member (53) is a spring member, the spring member being compressed in the open configuration and extended in the closed configuration.

4. The fluid system (30) of claim 2 or 3, wherein the valve member (52) is a stopper having a chamfered edge, the chamfered edge engaging a perimeter of the inlet (44) in the closed configuration to block the inlet (44).

5. The fluid system (30) of any of claims 2 to 4, wherein the retaining member is coupled to a wall (43c) of the inner cavity (43) by way of a connecting member adapted to transfer heat from the wall (43c) of the inner cavity (43) to the retaining member.

6. The fluid system (30) of any of claims 2 to 5, wherein the retaining member includes a housing (51) defining a cavity surrounding the valve member (52), the housing (51) having a coefficient of thermal expansion greater than a coefficient of thermal expansion of the valve member (52).

7. The fluid system (30) of claim 6, wherein the valve member (52) is engaged with an inner wall of the cavity of the housing (51) such that the valve member (52) is frictionally retained in the cavity in the open configuration, and the housing (51) is configured to thermally expand at the predetermined temperature threshold such that valve member (52) is released from the cavity and biased, by the biasing member (53), towards the inlet (44).

8. The fluid system (30) of any of claims 2 to 5, wherein the retaining member includes a housing (51) defining a cavity surrounding the valve member (52) and a bimetallic plate (55) retaining the valve member (52) in place in the open configuration, and the bimetallic plate (55) is configured to displace at the predetermined temperature threshold such that the valve member (52) is released by the bimetallic plate (55) and biased, by the biasing member (53), towards the inlet (44).

9. The fluid system (30) of claim 8, wherein, in the open configuration, a distal end of the bimetallic plate (55) engages a groove (52a) in the valve member (52) through a hole (51a) in the housing (51).

10. An assembly for an aircraft engine (10), comprising:
a plurality of components;
a source of fluid (31); and
the fluid system (30) of any preceding claim.

11. An aircraft engine comprising the assembly of claim 10.

12. A method of stopping a flow of a fluid to a component (41) of a fluid system (30) of an aircraft engine (10), the fluid being flammable, the method comprising:
permitting fluid communication from a source (31) of the fluid to the component (41) through an inlet (44) to the component (41), the component (41) containing a volume of the fluid during normal engine operation; and
upon the component (41) being exposed to a fire event, blocking fluid communication from the source (31) of the fluid to the component (41) by activating a valve (50) adjacent to the inlet (44) to seal the inlet (44), wherein the valve (50) is activated upon exposure to a predetermined temperature threshold corresponding to the fire event.

13. The method of claim 12, wherein activating the valve (50) adjacent to the inlet (44) includes biasing, via a biasing member (53) exerting a biasing force, a valve member (52) of the valve (50) towards the inlet (44) from a retaining member, the biasing force exceeding a retaining force of the retaining member when the valve (50) is exposed to the predetermined temperatures threshold.
